# EUROPEAN PATENT APPLICATION

(11) **EP 2 610 040 A1**
(43) Date of publication of application: **03.07.2013**
(21) Application number: 13150053.0
(22) Date of filing: 02.01.2013
(51) Int. Cl.: B29B 7/12, B29B 7/16, B29B 7/22, B29B 17/00, B08B 17/04, B01F 7/00, B01F 15/00, B01J 19/00

(54) **Mixing apparatus and method for the production of composite material**

(30) Priority: 02.01.2012 BE 201200004
(71) Applicant: Debergh, Ludo, 4607 Mortroux (BE)
(72) Inventor: Debergh, Ludo, 4607 Mortroux (BE)
(74) Representative: Caers, Raphael Frans Ivo

(57) **Abstract**

An apparatus is described for the mixing of granules of solid material with the ingredients required for a polyurethane (PU) composition, comprising a rotor which is mounted rotatably inside a mixing chamber (22) of which at least a part of the inner wall, and preferably each part of the inner wall which during operation comes into contact with all the ingredients required for the PU composition, is lined with a removable lining (41) manufactured from a plastic with which curing PU on a smooth surface thereof shows no significant adhesion. A method for the mixing of composite material based on PU, and for the manufacture of composite objects, including a sleeper for railway track rods, is also described.

## Description

### FIELD OF THE INVENTION

The present invention relates to the processing of composite material. More specifically, the invention relates to an improved mixing machine for the mixing of composite material with the ingredients required for polyurethane as binder, to a method for the manufacture of an object from this composite material, and to a sleeper for railway track rods which is manufactured from this composite material.

### BACKGROUND OF THE INVENTION

Various methods for the manufacture of composite materials are known. Thereby is often used a filling material to obtain a certain volume, to which fibres are added to increase the strength, and to which a binder is added to hold the whole together.

One finds mixing machines for the mixing of solids and liquids in the manufacturing of mortar, concrete and other water containing mixtures.

DE 10311342 B3 describes a mixing machine for the mixing of mortar. The mixing chamber of this machine is lined with a plastic lining. This lining embraces the ends of the cylinder shaped wall of the mixing chamber, is in addition also anchored by the spray nozzle carrier which is fitted through the lining of the mixing chamber, and is therefore not removable. The mixture from the mixing chamber is pumped away by an eccentric screw- or wormpump ("screw pump", "Schneckenpumpe"). Because this pump always moves the same volume at a particular rotational speed, the residence time in the mixing chamber may only be adjusted by simultaneously also changing the mixing energy which is added per unit of time.

US 4,205,919 describes a mixing machine for the mixing of a cement slurry into which for example glass fibres are embedded. The mixing chamber is lined with a tube shaped inner lining which may be replaced if it is worn-out. Also here, the residence time is not adjustable independently of the mixing energy which is added per unit of time.

DE 19908732 A1 also describes a mixing installation for mortar. The mixing chamber is also lined with a lining of steel plate, rubber or plastic, and this lining is removable from the mixing chamber. Also here, the residence time in the mixing chamber may only be adjusted by changing the rotational speed of the rotor, whereby also the mixing energy per unit of time is changed.

The mixing machines which are described in these documents are not usable for the mixing of composite materials based on polyurethane, because the polyol and the polyisocyanate already react during the mixing and the reaction product already starts to cure, such that the residence time in the mixing chamber must be controllable independently of the mixing energy supplied per unit of time. In this way, regardless of an adjustment of the residence time, a sufficient mixing may be assured.

WO 2011/007322 A2 describes a method in which, to a dry homogeneous mixture consisting of a fibre material with a certain particle size and granules of thermoset plastic particles with a certain particle size and with limited moisture content, a particular amount of at least one polyol and of at least one isocyanate is added. After the mixing of these components to form a viscous homogeneous mixture, a shaped object is shaped from it by curing the mixture in a mould whereby a particular temperature and pressure are maintained inside the mould during a given period of time.

WO 2011/007322 A2 shows in its figure 9 a schematic diagram of a mixing machine which may be used in performing the described method. After the opening of the outlet cover of the mixing machine, there still remains an amount of viscous homogeneous mixture inside the mixing chamber, on the walls of it, and on the spiral and the teeth of the rotor in the mixing chamber. To avoid that this remaining mixture cures and the mixing machine would become clogged, the document proposes to so-called "rinse dry" the machine before it is shut down. Thereby, the machine is filled again with a dry homogeneous mixture but without addition of polyol and isocyanate. The rinsed out material may then be recycled.

The applicants have however noticed that also the dry rinsing of the mixing machine as described in WO 2011/007322 A2 may not avoid that solid material still builds up against the walls of the mixing chamber and on the moving parts therein. After some time the mixing machine may not work well anymore, and it needs to be cleaned.

EP 307562 describes a machine for the mixing of polyol and (poly)isocyanate, which uses a screw shaped rotor inside a mixing chamber. The mixing chamber and the rotor are shaped conically for providing an additional mechanical action, and both have a zirconium oxide or silicon nitride ceramic lining, which is polished smoothly. Both elements contribute to a reduction in the build up of a solid deposit of polyurethane.

US 4899912 also describes a mixing head for the mixing of polyol and isocyanate, which is kept free from solid polyurethane deposit by ceramic scrapers and mechanical action.

These lining material are scarce and expensive, and the mixing machines are also exceptionally complex to keep the problem of solid polyurethane deposition under control. Furthermore, with these embodiments one must avoid that the rotor jams, because then the machine cannot anymore be dismantled without first removing the majority of the deposits, which typically must be done using chemical agents whereby a problem arises of the disposal of a heavily contaminated and usually aggressive and toxic waste stream. To avoid jamming of the rotor, the cleaning must be performed when the amount of deposit is still very limited, which leads to shorter periods between two cleaning treatments.

The present invention has the objective of solving this problem in a much simpler manner.

The present invention aims to avoid or at least alleviate the problems described above and/or generally provide improvements.

### SUMMARY OF THE INVENTION

According to the invention, there is provided an apparatus and a method for the mixing of granules of solid material with the ingredients required for a polyurethane composition.

The invention therefore provides an apparatus for the mixing of granules of solid material with the ingredients required for a polyurethane (PU) composition, comprising a rotor which is mounted rotatably inside a mixing chamber of which at least a part of the inner wall, and preferably each part of the inner wall which during operation comes into contact with all the ingredients required for the PU composition, is lined with a removable lining manufactured from a plastic with which curing PU on a smooth surface thereof shows no significant adhesion, whereby the mixing chamber includes a thrust zone, downstream followed by a mixing zone and whereby the mixing chamber is equipped with an outlet mouth and an outlet cover for the product mixed in the mixing chamber, whereby the outlet cover is pressable against the outlet mouth of the mixing chamber, against the thrust pressure which may occur inside the mixing chamber.

We have found that in the apparatus according to the present invention the ingredients for a composite composition with PU as binder may be mixed very adequately, whereby only very slowly a deposit of cured PU will form inside the mixing chamber, such that the mixing chamber remains operational for a longer time. In addition, when yet deposit did form against the walls of the mixing chamber, this deposit has formed against the removable lining. If the mixing chamber requires cleaning for that reason, then this deposit may be removed together with the removable lining, and there remains little or no deposit against the unlined walls of the mixing chamber, from which it may be removed more easily if necessary, by mechanical action rather than by the use of aggressive and/or toxic chemicals. Furthermore, the mixing machine is designed such that the entire content, including the entire rotor, the inner lining and the deposit of cured composite material, may be removed together as one entity. The mixing machine brings the further advantage that the internal part, including the rotor, together with the lining and the thereto attached and as deposit cured composite material may be removed, after which the lining may be opened and free access is gained to the internal parts of the machine such that the deposit thereon may readily be removed and without the need for chemicals. The parts may thereby be cleaned thoroughly without generating a dangerous waste stream.

Furthermore, the solid waste generated from the opening of the lining and from the cleaning of the parts of the machine does not become contaminated with foreign components, and therefore remains suitable, possibly after appropriate grinding, for recycling as solid material in the mixing machine and as such finding its way as useful ingredient of the composite material of the object produced. Because of the great accessibility for removing the deposit there may also be formed more deposit before the mixing chamber needs to be cleaned, and the mixing chamber may thus be kept in operation for longer periods between two cleaning treatments. The mixing machine according to the present invention must because of that advantage preferably only be cleaned when the amount of deposit which is deposited becomes impairs the capability of the motor to rotate the rotor at a sufficiently high speed.

Another advantage of the mixing machine is that the residence time in the mixing chamber may be controlled by regulating the counter pressure which the outlet cover exerts on the outlet mouth. It is indeed important that the residence time of the ingredients which are required for the PU composition in the mixing apparatus is lower than the time which the PU composition requires to cure completely. The complete curing may indeed only be achieved when the viscous homogeneous mixture is introduced into the mould and whereby in the mould the particular temperature and pressure have been maintained. Because the curing time is dependent of a number of factors, such as the nature of the ingredients, the temperature in the mixing chamber and the humidity of the ingredients, which are not necessarily constant or may be kept constant, it is important that this residence time may be assured, and preferably adjusted, and this independently of the rotor speed, i.e. without that at the same time the achieving of a sufficient mixing is jeopardised. Furthermore, with the mixing machine according to the present invention, this residence time is preferably even further adjustable by adjusting the counter pressure with which the outlet cover presses against the outlet mouth.

In another embodiment the invention provides a method for the mixing of granules of solid material with the ingredients required for a polyurethane (PU) composition in which the solid material granules and the ingredients required for the PU composition are introduced into the thrust zone of the apparatus according to the present invention, are pushed by the rotor of the apparatus through the mixing zone of the apparatus, where they are mixed with each other, after which they are pushed out of the mixing zone as a homogeneous composite mixture.

This method brings the advantage that the mixing machine only pollutes slowly because of deposit of cured PU, because of which the mixing machine remains operational for a larger part of the time, and must be cleaned only infrequently. The time required for a cleaning of the mixing chamber may also be kept very short, for example by simply replacing the removable lining, and if necessary the rotor may also be replaced by a new or an already cleaned specimen.

Furthermore, the inventors have found that the method according to the present invention may be used to manufacture objects which offer a very exceptional combination of useful properties in particular applications. The method according to the present invention manufactures a composite material with polyurethane as binder for an amount of granules of solid material, preferably including thermoset plastic particles, where preferably also fibres are part of, more preferably recycled particles, and even more preferably the composite material which is described in WO 2011/007322 A2 in all its possible details.

The inventors have found that a sleeper for railway track rods, which is obtainable according to the method of the present invention, exhibits very suitable properties. Thereby, the inventors state that it is not essential that the method according to the present invention is used, but that the sleeper may also be manufactured with other methods, such as described for example in WO 2011/007322 A2, but that it is important however that certain parts of the sleeper, preferably the support blocks, are manufactured from the composite material which may be obtained with the method according to the present invention. Preferably, this object is a sleeper for railway track rods, and more preferably the support blocks of the sleeper are at least partially manufactured from this composite material.

Traditionally, sleepers for railway track rods are manufactured from wood, preferably from the stronger sorts of wood such as oak or tropical sorts of hardwood. Wood has however the problem that it has to be treated or drenched, such as with or in creosote, to be able to offer an acceptably long life time. Wood is indeed vulnerable for decomposition and for scaling with moss. This treatment however generates ecological problems. The preferred sorts of wood are also rather scarce, because of which the product may not be offered very economically. Another problem with such sleepers is that the wood around the bolts, which must keep the railway track rods in their place, has the tendency to start rotting quickly, because of which regularly a maintenance team must pass to tighten these bolts in order to fix the railway track rods again properly.

An alternative for the wooden sleepers is the embodiment in concrete, usually consisting of two support blocks for the railway track rods, which are kept at a fixed distance of each other by means of a metal rod which is at both ends incorporated into the support blocks. A problem with these concrete sleepers is that they are rather heavy. Another problem is that they are sensitive to vibrations, and that therefore often an elastic layer must be provided between the railway track rod and the sleeper, to reduce the effects of the vibrations caused by passing rolling stock. Yet another problem is that the concrete pieces of the sleeper have to be reinforced heavily, such as with a metal netting. With concrete sleepers it is therefore usually necessary to already provide at the moment of manufacture the clamps or holes for attaching the railway track rods. This has the consequence that the concrete sleepers may only be used for the installation for which they are manufactured.

The inventors have found that a sleeper according to the present invention offers the advantage that on the one hand it offers the advantages of a wooden sleeper, in the sense that the means for attaching the railway track rods do not have to be provided beforehand, and may be chosen freely afterwards, because the composite material actually imposes no or little restrictions in connection with where and how the railway track rods may be attached on the composite part, and a metal bolt may readily be screwed into it. The sleeper thereby offers a large zone available for the attachment of the railway track rod. Therefore, it is more multifunctional.

In comparison with the wooden sleeper the sleeper from composite materials as manufactured according to the method of the present invention offers the advantage that it is far less subject to decomposition, and moss growth, that it requires no treatment with chemical agents which may be dangerous for man and environment, that they may be manufactured from recycled materials, and that they thus cannot only be more environmentally friendly and/or more ecological but also more cost favourable. Furthermore, the inventors have found that the composite material, when a bolt is screwed into it, has the tendency to tighten even more over time, instead of loosening such as with wood, for example as caused by rotting. The bolt that holds the sleeper has thus the tendency to become even more firmly stuck when it is mounted in a composite part of the sleeper according to the present invention.

On the other hand, in comparison with the concrete sleeper, the sleeper of composite material as manufactured according to the method of the present invention offers the advantage that it is far less subject to temperature fluctuations, has a longer lifetime, and has a much lower weight, up to typically only half the weight. These advantages bring other advantages in the handling, the transportation, the installation, and the entire life of the sleeper.

Furthermore, the composite material is far less subject to dimensional fluctuations under the influence of humidity, such as with wood, and/or of temperature, such as with concrete, i.e. to shrinkage or expansion, but also to moss growth. Furthermore, it offers a longer lifetime, and has a much more advantageous "carbon footprint" as compared to those that are manufactured from hardwood or concrete.

An additional advantage is that the parts of the sleeper according to the present invention may eventually be recycled again, such as in the method according to the present invention, or the one described in WO 2011/007322 A2. Compared to a sleeper in which the binder of the composite material comprises a thermoplastic as major component, the one according to the present invention offers the advantage of a better behaviour under temperature fluctuations, but also several of the advantages already mentioned above.

In an embodiment, the sleeper according to the present invention comprises, similar to particular concrete sleepers, two support blocks from composite material for the support of the railway track rods, with in between them at least one connection, preferably a metal rod which is on both sides incorporated in the support blocks. The metal rod is preferably made corrosion proof or corrosion resistant, for example by galvanisation. It is also advantageous to provide the rod sideways, preferably at its ends, with transverse elements for obtaining a better attachment to the composite material.

### BRIEF DESCRIPTION OF THE DRAWINGS

Figure 1 is a schematic representation of the mixing machine in an embodiment according to the present invention.
Figure 2 shows in perspective a rotor such as may occur internally in the mixing machine in an embodiment according to the present invention.
Figure 3 shows in perspective view how in an embodiment according to the present invention an internal lining may be introduced into the mixing chamber.
Figure 4 shows how the mixing chamber from figure 3 may be closed after introduction of the internal lining.

### DETAILED DESCRIPTION

The present invention will be described in the following with respect to particular embodiments and with reference to particular drawings, but the invention is not limited thereto, only by the claims. Any drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are mutually interchangeable under appropriate circumstances and the embodiments of the invention may operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein may operate in other orientations than described or illustrated herein.

The term "comprising", used in the claims, should not be interpreted as being restricted to the means listed thereafter. It does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

In this document is meant by "particle diameter" or "granule size" or "particle size" of a particle the largest straight distance between two points of that particle. With "mean" is meant the mathematical or arithmetic mean over a group of particles.

In this document is meant with "length of the fibre material" or "fibre length" the largest straight distance between two points of a particle of a fibrous material, also if the particle is not of a pronounced elongated shape. With "mean" is meant the mathematical or arithmetic mean over a group of particles.

In this document the terms isocyanate and polyisocyanate are used interchangeably and as full synonyms.

The present invention is exceptionally suitable for the mixing of the ingredients required for the composite material which is described in WO 2011/007322 A2.

So, the invention uses in an embodiment a dry homogeneous mixture which comprises a fibre material with an average length of 2 - 40 mm and a granulate of thermoset plastic particles with a mean particle size of 2 - 15 mm, whereby the volume percent of the fibre material amounts to 10 - 80% of the dry homogeneous mixture, and whereby the dry homogeneous mixture has a humidity which is in equilibrium with air having a dew point of at most 25°C.

Preferably, the dry homogeneous mixture which is used with the present invention has a temperature of at most 50°C, preferably at most 45°C, more preferably at most 40°C, and even more preferably at most 35°C. If the temperature of the dry homogeneous mixture is too high, the polyol and the isocyanate will combine faster, which is not desirable. On the other hand, a temperature below ambient temperature is not desirable, because this requires active cooling and/or slows down the reaction too much.

If necessary, the components of the dry homogeneous mixture are being dried. This may happen together, such that only one drying step and/or one drying installation must be provided, and also that the mixture preferably may be further mixed and/or homogenised during drying. Or the drying of the components may happen separately.

In the mixing chamber according to the present invention preferably at least one polyol and at least one isocyanate are added to the dry homogeneous mixture, to form a viscous compound mixture, whereby the weight percent of the at least one polyol and the at least one isocyanate together amounts to 4.0 - 25.0 % of the dry homogeneous mixture, and a viscous homogeneous mixture is formed by the mixing of the viscous compound mixture.

It is generally described in the literature of the art and clear for the skilled person with which plastics, with a smooth surface thereof curing PU does not show significant adhesion. Furthermore, it is very easy to determine experimentally whether a plastic satisfies this condition and thus would be suitable to achieve the mentioned advantageous effects of the present invention.

In an embodiment of the present invention the lining is manufactured from a material selected from the group consisting of polyethylene, polypropylene, silicones, polytetrafluoroethylene (PTFE), and combinations thereof. These plastics are extremely suitable because curing PU shows little or no affinity with them, and engages little or no adhesion with them, in particular if the plastic surface is smooth.

The inventors particularly prefer a lining which is manufactured from polypropylene. This material is abundantly available at acceptable cost, readily shapeable, and often obtainable in shapes which are with little adaptation suitable for appropriately selected designs of mixing chambers according to the present invention.

The inventors have found that it is advantageous to provide a lubricant between the inner wall of the mixing chamber and the outer wall of the lining. This simplifies the introduction of the lining in the mixing chamber, but, more importantly, also simplifies the removal of the lining with the thereon deposited deposit from a mixing chamber after use. Therefore, in an embodiment of the present invention a lubricant is provided between the inner wall of the mixing chamber and the lining, preferably a grease or a lubricant grease or more preferably an oil or lubricant oil, because oil is easier to apply. Lots of suitable lubricants are known to the skilled person. Preferably, the inventors select a lubricant on which curing PU shows no or little adhesive force, or with which it shows little or no affinity. Suitable lubricants are lubricant greases and lubricant oils based on hydrocarbons, if required thickened with metal salts, such as commercially available.

In an embodiment of the present invention at least the inner wall of the mixing zone is lined with the lining, preferably the entire inner wall of the mixing chamber.

In an embodiment the mixing chamber comprises at least one inlet for the ingredients required for the PU composition, which comprise at least one polyol and at least one polyisocyanate, and preferably the polyol is introduced in the thrust zone of the mixing chamber. Usually, the polyol on itself reacts little or not with the components of the dry homogeneous mixture, such that there may form only little or no deposit at the position of this mixing, especially no curing PU deposit.

In an embodiment of the present invention the mixing chamber comprises at least one inlet for the polyisocyanate, which is introduced downstream of the position where the polyol is introduced, seen in the thrust direction. The polyisocyanate may still be introduced in the thrust zone, at the position of the transition between the thrust zone and the mixing zone, or in the mixing zone itself. In the mixing zone the inventors provide a given amount of back mixing, such that the isocyanate may spread over the entire mixing zone even if it is only introduced into the mixing zone. In the thrust zone the inventors provide preferably little or no back mixing, such that any isocyanate introduced there may move primarily in the thrust direction towards the mixing zone.

In an embodiment of the present invention the inlet for the polyisocyanate, and preferably also the inlet for he polyol, for the downstream last part, seen in the flow direction of the polyisocyanate and of the polyol, are provided with a plastic lining with which curing PU on a smooth surface thereof shows no significant adhesion, preferably the same plastic as used for the lining of the mixing chamber. The inventors have found that thereby the risk may be reduced for forming deposits of cured PU in the inlets for the polyol and/or for the polyisocyanate, which might lead to obstruction of said inlet and thus to a poor functioning of the apparatus.

In an embodiment of the present invention the mixing chamber comprises a cylindrical tube with a diameter d expressed in millimetre, which nominal diameter preferably lies in the range of 200-300 mm, more preferably of 210-290 mm, even more preferably of 220-280 mm, and still even more preferably 230-270 mm, preferably of 240-260 mm, more preferably of 245-255 mm, even more preferably a nominal diameter of approximately 250 mm. The inventors have found that the shape of a cylindrical tube is exceptionally suitable for lining with a plastic lining according to the present invention.

In an embodiment of the mixing chamber with a metal tube, the inner diameter of the tube measures (d + 0.1) mm and it is even more preferably finished to a tolerance of at most ±0.1 mm, preferably at most ±0.05 mm, whereby the lining consists at least partially of a cylinder which has an outer diameter which is smaller than the inner diameter of the metal cylinder, preferably has an outer diameter of (d ± 0.05) mm, and more preferably the lining consists of a plastic tube manufactured by extrusion with a nominal diameter of d, expressed in mm. The inventors have found that plastic tubes with suitable dimensions are readily available at acceptable cost. Moreover, the inventors have found that the accurate adaptation of the inner diameter of the metal tube of the mixing chamber with the outer diameter of the plastic lining offers the advantage that little or no curing PU may leak between the lining and the inner wall of the mixing chamber, where it would impair the later removal of the lining.

In an embodiment of the mixing chamber according to the present invention the lining of the mixing chamber comprises a plastic pipe with an outer diameter d, preferable a piece of polypropylene sewer pipe of suitable length to line at least the mixing zone. Polypropylene sewer tubes are readily available at acceptable cost such that they do not have to be recycled for economical reasons. Furthermore, they are exceptionally easily adaptable for use as lining for the mixing chamber according to the present invention. As such, they are easily brought to the correct length and/or provided with the necessary openings, such as for the outlet of the product which is mixed in the mixing chamber, and/or for the inlet of the granules of solid material which have to be incorporated into the composite.

In another embodiment, the lining of the mixing chamber is anchored in a detachable manner to the wall of the mixing chamber, preferably with at least one bolt, more preferably a bolt with a sunken head which sinks into a conical recess in the lining, and whereby the bolt may be fixed through the lining and through an opening in the wall of the mixing chamber with a nut. This anchoring ensures that the lining remains in place during the mixing operation, such that functioning of the mixing chamber is not jeopardized. The inventors thereby prefer to use a method of anchoring which cannot hinder the moving internal parts, but which is readily removable in order to allow removal of the lining from the mixing chamber.

Preferably, the mixing chamber according to the present invention may be opened for removing the lining and the remaining content including most of the deposit. With that goal is in an embodiment of the present invention the mixing chamber at least at the end of the mixing zone, herein called the foot end, and preferably also at the opposite end, herein called the head end, closed with a blind flange, preferably a metal blind flange, which is at the inside provided with a lining manufactured from a material with which curing polyurethane does not form a good adhesion, preferably from the same material as from which the lining of the other inner walls of the mixing chamber is lined, preferably with a lining which is easy to replace. In this way, the deposit which forms on the inside of at least the therefore vulnerable cover becomes readily removable and the mixing chamber may be restored readily into a clean state.

In another embodiment the outlet cover for the product mixed in the mixing chamber is provided with a lining manufactured from a material with which curing polyurethane does not form a good adhesion, preferably from the same materials as with which the lining of the other inner walls of the mixing chamber is lined, preferably with a lining which is easy to replace. The inventors find also this easier to restore also this part of the mixing chamber into a clean state.

In an embodiment, this outlet cover is pressed against the outlet mouth of the mixing chamber, against the thrust pressure which may occur in the mixing chamber, such that the content may be kept in the mixing chamber for the time required to obtain the required mixing. The outlet cover is pushed with a predetermined and preferably even an adjustable force. This force may be delivered by a spring, for example a metal spring, such as a leaf spring or a coil spring. The inventors have however found that a spring, especially a coil spring may easily contaminate whereby its functioning may be influenced. The inventors prefer at least for that reason to use gravity as that force, for example by attaching to the outlet cover in an appropriate manner a rod carrying a counter weight, which will by its own weight be pressing the outlet cover, turning around its hinge, against the outlet mouth. In addition, the inventors prefer to attach this counter weight in a movable way onto that rod, such that by the lever effect the force may be regulated with which the outlet cover is being pressed against the outlet mouth of the mixing chamber, which offers an additional way for steering the residence time in the mixing chamber and thus the mixing time.

In an embodiment of the present invention, the part of the rotor in the thrust zone is at least partially and preferably over the entire thrust zone provided with a screw or spiral, suitable for giving thrust to the content of the thrust zone in the direction of the mixing zone. In this way, the granules of solid material may be pushed into the mixing zone, and, with supply of new material, the content of the mixing zone may be pushed further, up to against the outlet cover, if present, which, with adapted design, it may be able to push open with this thrust force.

In an embodiment of the present invention, at least one of the parts and preferably all parts of the rotor which come into contact with curing PU are manufactured from a hard type of metal, preferably a hard type of steel, and more preferably TOOLOX 44 steel. The inventors have found that such construction materials offer the advantage that with the flow of the composite mixture during the mixing process in the tube, in particular if glass fibre is thereby used, as well as with the mechanical cleaning of the rotor, they are hardly or no subject to wear and tear, such as by the used tools. This is important because the wear would occur mainly at the end of the blades, because of which the clearance between the ends of the blades and the inner wall of the lining would increase. A larger clearance would allow for a part of the mixture to find its way to the outlet faster, and thus possibly for being mixed insufficiently.

In an embodiment of the present invention, the part of the rotor in the mixing zone is at least partially provided with mixing blades, which are preferably mounted at an angle of 60° with respect to the axis of the rotor. Preferably, the width of the blades varies, such as from 50 mm to 80 mm. Preferably, the blades have a height such that the clearance between the ends of the blades and the inner wall of the inner lining is not larger than approximately 3 mm. The smaller blades, such as of 50 mm, are preferably mounted in the mixing zone immediately downstream after the thrust zone. The inventors have found that because of this a deceleration arises of the thrust pressure, which improves the mixing of the components in the mixing zone. Preferably downstream thereafter follow the wider blades, such as of 80 mm. These blades may again build up a higher thrust pressure because of which the materials may be pushed to the exit and the outlet cover may be pushed open, against the force which preferably presses the outlet cover against the outlet mouth.

In an embodiment of the present invention the rotor is mounted rotatably by means of suspension in two roller bearings, preferably at both ends of the rotor, preferably with roller bearings provided in the blind flanges, if these are present, and whereby preferably at least the roller bearing which comes into contact with all he ingredients required for a PU composition is a closed roller bearing, and preferably all the roller bearings are closed roller bearing. This design allows in a simple manner the opening of the mixing chamber without the rotor having to move relative to the lining of the wall of the mixing chamber, with which the rotor may be connected through the deposit. The closed roller bearings ensure that their operation may not be hindered by any curing PU leaking in, which may form a deposit in it.

In an embodiment of the method according to the present invention, the residence time, in the apparatus, of the ingredients required for the PU composition is lower than the time which the PU composition requires to cure completely, which preferably lies in the range of 5 seconds to 5 minutes, more preferably at least 10 seconds, even more preferably at least 20 seconds, eventually at most 4 minutes, preferably at most 3 minutes, more preferably at most 2 minutes, and even more preferably a most 1 minute, and still even more preferably at least 45 seconds, and most preferably at most 30 seconds. The rate of curing of the polyurethane in the mixing chamber may be adjusted with suitable reaction accelerators, sometimes also called catalysts, and/or reaction decelerators, sometimes also called inhibitors. The inventors have found that a residence time in the range of 20-30 seconds requires little or none of such additives to obtain the proper mixing, and yet is sufficiently low to avoid excessive heating of the composite mixture during mixing, which makes the further processing of the mixture easier, and which is also sufficiently low for maintaining a high production rate.

In an embodiment of the present invention the used granules comprise solid material thermoset plastic particles.

In another embodiment of the present invention the apparatus is rinsed dry before the operation of the apparatus is shut down. In a particular form of this embodiment, the solid material used comprises particles which are derived from the material originating from the dry rinsing of the apparatus.

In an embodiment of the method according to the present invention, after at least one mixing operation, and more preferably post a series of mixing operations through which a PU deposit is formed on the internal parts of the mixing chamber, the apparatus is shut down, opened, the anchoring of the lining is detached, after which the lining with its content and the rotor is removed, preferably by pushing all of them out of the mixing chamber, preferably with the aid of a pneumatic or hydraulic press.

In one particular form of this embodiment of the method according to the present invention, the lining is opened from the outside, preferably by mechanically splitting the lining into at least two parts, such as by grinding the plastic lining into pieces with a grinding disc, because of which the rotor with the deposit becomes accessible.

Preferably, after the opening the lining of the rotor is cleaned by removing the PU-containing deposit from the rotor, and preferably also from at least one of the other parts onto which PU-containing deposit forms. Thanks to the ready accessibility, preferably only mechanical tools may be deployed hereby, without any use of chemicals, such that the deposit is not contaminated with foreign components, and the removed deposit may be recycled as part of the solid material which is employed as raw material in the present invention. In this way, a waste stream is avoided, which with the deployment of chemicals may lead to extra problems to find a suitable disposal route for.

The inventors have found that also the removed split lining is suitable for recycling, preferably to a limited extent, and more preferably under dilution of material of another kind, because the compatibility of the material of the lining with the curing PU may be limited. The inventors have found that the amount of used lining material typically limited such that it may readily be mixed without significant difficulties among the solid material which is employed with the invention. To allow the recycling it is recommended to optionally provide a particle size reduction step. Therefore, in an embodiment, the present invention provides that the removed split lining and/or the removed PU-containing deposit, optionally together with other appropriate solid material, is ground to the suitable particle size, if necessary is dried to the suitable degree of humidity, and is recycled at least as a part of the granules of solid material.

In an embodiment of the method according to the present invention, the cleaned rotor is returned into the mixing chamber which is beforehand equipped again with the plastic lining, after which the mixing chamber is preferably put back into operation.

The method according to the present invention is preferably part of a more elaborate method. In an embodiment the method according to the present invention further comprises the shaping of a shaped object by the curing of the viscous homogeneous mixture in a mould, preferably at a temperature of 15-60°C and/or under a curing pressure of at least 50 bar gauge, whereby preferably the pressure is maintained during at least 1 minute, whereby preferably an amount of the viscous mixture which is introduced into the mould is 1.8 - 2.2 times the volume of the space in the closed mould.

The inventors have found that with this method exceptionally useful objects may be manufactured. In a further embodiment the shaped object is thus selected from the list of a sleeper for the support of railway track rods or rails, a manhole cover, which manhole cover preferably meets the requirements of load class A and/or load class B and/or load class C according to the standard NBN EN 124, a grid, a cattle grid, a clinker, a floor tile, a roofing tile, a flower box, a waste bin, an element for street furniture, a fire hydrant pot, a fire hydrant frame, a foundation seat for a fire hydrant and a frame for a fire hydrant.

The invention is now further illustrated by the following drawings.

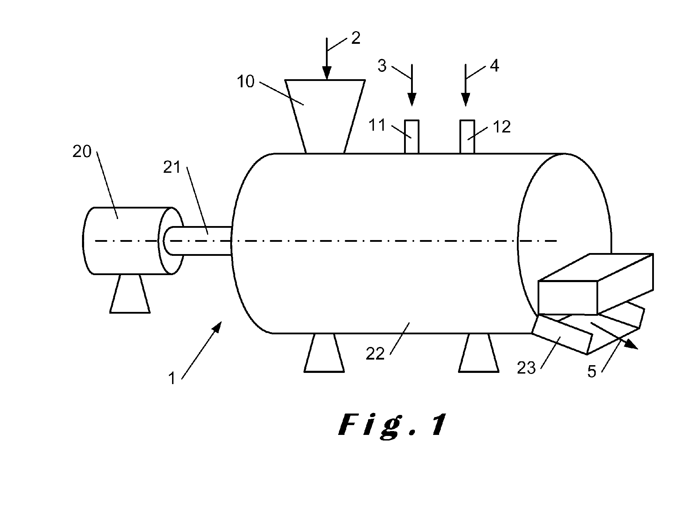

Figure 1 shows how the mixing machine according to the present invention may look schematically in a particular embodiment. The mixing machine 1 comprises a mixing chamber 22. A rotor inside the mixing machine is driven by a motor 20 through transmission 21. The mixing chamber 22 has in this embodiment three inlets. Through inlet 10 the dry homogeneous mixture 2 of the solid components is introduced. Through inlet 11 at least on polyol is then introduced. Through inlet 12 at least on polyisocyanate 4 is introduced.

During the operation of the mixing machine 1 an amount of the dry homogeneous mixture 2 will first be introduced into the mixing chamber 22. This dry homogeneous mixture 2 is preferably at a temperature of at most 40°C, at most 35°C, preferably at ambient temperature (such as about 18°C in winter, up to 30°C in summer). Temperatures of more than 30°C may for example be achieved when a local drying of the homogeneous mixture 2 is provided. Post introduction of an amount of the dry homogeneous mixture 2 in the mixing chamber 22 (e.g. almost 8 kg, depending on the dimensions of the mixing machine), an amount of polyol 3 (e.g. almost 280 g) and an amount of isocyanate 4 (e.g. almost 280 g), together this being 7 weight percent relative to the dry homogeneous mixture 2, will be added, and be spread as uniformly as possible during a predetermined time (e.g. approximately 20-30 seconds) after the introduction of the polyol 3 and the isocyanate 4, to form a viscous homogeneous mixture. The mixing machine 1 is by preference constructed such that after this predetermined time sufficient pressure is built up inside the mixing chamber 22 such that the mechanical outlet cover 23, onto which a mechanical counter pressure is exercised, will open, such that the viscous homogeneous mixture 5 may leave the mixing chamber 22, and may be introduced into a mould. The counter pressure on the outlet cover is for instance exercised by means of a spring, but preferably by a movable counter weight on the lever rod, not drawn. It has been found that there remains about 5 kg of viscous homogeneous mixture inside the mixing chamber 22 after the opening of the outlet cover 23, in particular on the walls of the mixing chamber 22, on the spiral and on the teeth, which will cure onto the machine1 if this would be shut down. To avoid that the mixing machine 1 will eventually get clogged, the machine is as it where "rinsed dry" before it is shut down. This may for example be done by filling machine 1 again with the dry homogeneous mixture 2, but without addition of polyol 3 and polyisocyanate 4. Because polyurethane is thermoset plastic material, this matter may be recycled again. Rinsing with another dry mixture (e.g. dried granulate of thermoset plastic particles without fibres) is also possible.

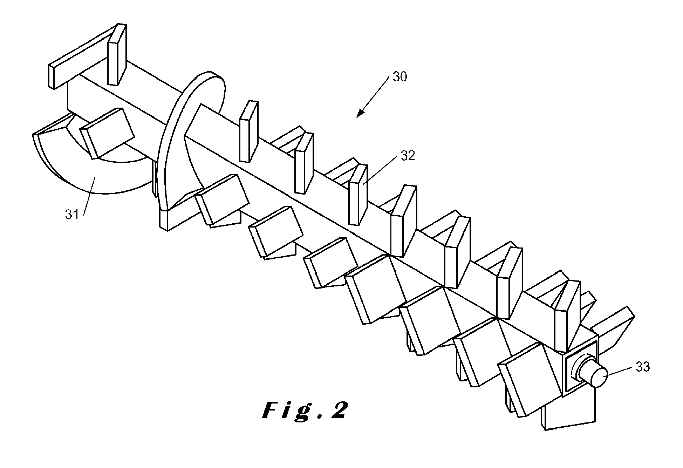

Figure 2 shows a rotor 30 which in an embodiment may be mounted in the mixing chamber 22 of figure 1 and be driven by a motor 20 through transmission 21. The rotor 30 has a spiral 31 which pushes the dry homogeneous mixture from the inlet into the actual mixing chamber. The part of the rotor which is located in the actual mixing chamber is equipped with mixing blades 32. The rotor is suspended by axis 33.

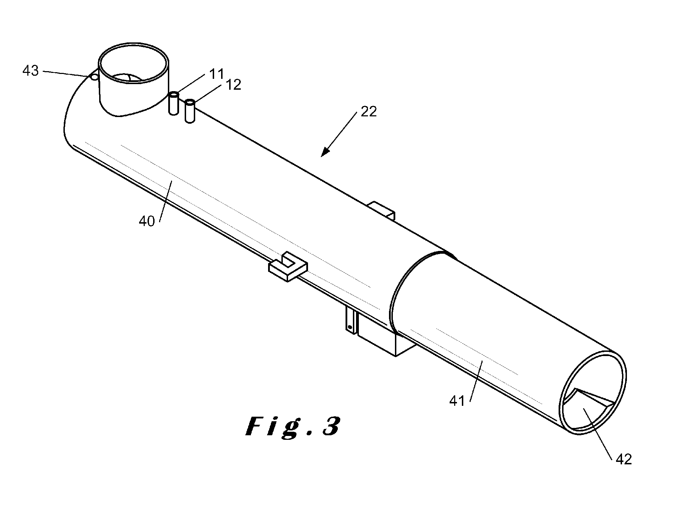

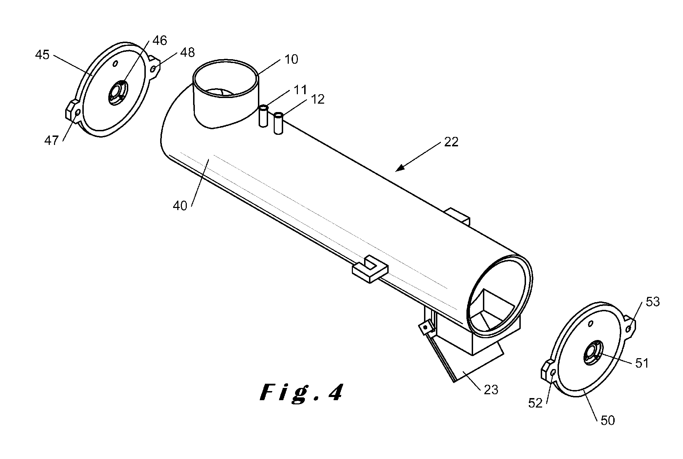

Figure 3 shows how the mixing chamber 22 in an embodiment comprises a metal body 40, into which a plastic tube 41 is pushed. In this tube, an opening 42 is provided to come above the outlet cover of the mixing machine, and also another opening (not shown) which is provided to come under the inlet for the dry homogeneous mixture. The lining 41, when it is brought in its place inside the body 40, is preferably anchored for example by putting a bolt through lining and body, at a suitable position such as position 43 indicated on figure 3. After the lining is anchored, preferably then only an opening is drilled in the lining for the passage of the liquid ingredients through inlets 11 and 12 (indicated on figures 1 and 4).

Figure 4 shows how the mixing chamber according to the present invention, after the insertion of the internal lining, may be sealed. The body 40 may at each of both ends be closed with one cover 45 and 50. These covers are equipped with roller bearings 46 and 51 to support the rotor inside the mixing chamber. These roller bearings are of the closed type, to prevent disturbing matter from inside the mixing chamber from entering and disabling the roller bearing. The covers are preferably equipped with eyes 47, 48 and 52, 53, through which two threaded rods may be applied (not shown) and, by tightening of the nuts on these threaded rods, the covers may be pulled onto the body of the mixing chamber. Figure 4 also shows the inlets 10, 11 and 12, and the outlet cover 23, all discussed before as part of figure 1. Outlet cover 23 is preferably also lined with a lining with the same characteristics as the lining of the mixing chamber.

## Claims

1. An apparatus (1) for the mixing of granules of solid material (2) with the ingredients required for a polyurethane (PU) composition, comprising a rotor (30) which is mounted rotatably inside a mixing chamber (22) of which at least a part of the inner wall, and preferably each part of the inner wall which during operation comes into contact with all the ingredients required for the PU composition, is lined with a removable lining (41) manufactured from a plastic with which curing PU on a smooth surface thereof shows no significant adhesion, whereby the mixing chamber (22) includes a thrust zone, downstream followed by a mixing zone and whereby the mixing chamber (22) is equipped with an outlet mouth and an outlet cover (23) for the product mixed in the mixing chamber (22), whereby the outlet cover (23) is pressable against the outlet mouth of the mixing chamber (22), against the thrust pressure which may occur inside the mixing chamber (22).

2. The apparatus (1) according to claim 1 whereby the lining (41) is manufactured from a material selected from the group consisting of polyethylene, polypropylene, silicones, polytetrafluoroethylene (PTFE), and combinations thereof.

3. The apparatus (1) according to claim 1-2 whereby the mixing chamber (22) comprises at least one inlet (11, 12) for the ingredients required for the PU composition, which comprise at least one polyol (3) and at least one polyisocyanate (4), and whereby preferably the polyol (3) is introduced into the mixing chamber (22) in the thrust zone.

4. The apparatus (1) according to claim 3, whereby the mixing chamber (22) comprises at least one inlet (12) for the polyisocyanate (4), which is introduced downstream of the position where the polyol (3) is introduced, seen in the thrust direction, whereby preferably the inlet (12) for the polyisocyanate (4), and more preferably also the inlet (11) for the polyol (3), for the downstream last part, seen in the flow direction of the polyisocyanate (4) and of the polyol (3), is provided with a plastic lining (41) with which curing PU on a smooth surface thereof shows no significant adhesion, preferably the same plastic as is used for the lining (41) of the mixing chamber (22).

5. The apparatus (1) according to any one of the preceding claims whereby the lining (41) is anchored in a detachable manner to the wall of the mixing chamber (22), preferably with at least one bolt, more preferably a bolt with a sunken head which sinks into a conical recess in the lining (41), and whereby the bolt may be fixed through the lining (41) and through an opening in the wall of the mixing chamber (22) with a nut.

6. The apparatus (1) according to any one of the preceding claims whereby the mixing chamber (22) at least at the end of the mixing zone, herein called the foot end, and preferably also at the opposite end, herein called the head end, is closed with a blind flange, preferably a metal blind flange, which is at the inside provided with a lining manufactured from a material with which curing polyurethane does not form a good adhesion, preferably from the same material as from which the lining of the other inner walls of the mixing chamber (22) is made, preferably with a lining which is easy to replace.

7. A method for the mixing of granules of solid material with the ingredients required for a PU composition in which the solid material granules (2) and the ingredients required for the PU composition are introduced into the thrust zone of the apparatus (1) according to any one of the preceding claims, are pushed by the rotor (30) of the apparatus (1) through the mixing zone of the apparatus (1), where they are being mixed with each other, after which they are pushed as a homogeneous composite mixture (5) out of the mixing zone.

8. The method according to claim 7 whereby the residence time, in the apparatus (1), of the ingredients required for the PU composition is lower than the time which the PU composition requires for curing completely, and preferably is within the range of from 5 seconds to 5 minutes.

9. The method according to any one of claims 7-8 whereby the apparatus (1) after at least one mixing operation, and preferably after a series of mixing operations, whereby PU deposit is formed on the internal parts of the mixing chamber (22), is shut down, opened, the anchoring of the lining (41) is detached, after which the lining (41) with its content and the rotor (30) is removed, preferably by pushing them out of the mixing chamber (22), preferably with the aid of a pneumatic or hydraulic press.

10. The method according to claim 9 whereby, after the removal of the lining with its content and the rotor, the lining (41) is opened from the outside, preferably by mechanically splitting the lining into at least two parts, such as by grinding the plastic lining (41) into pieces with a grinding disc, whereby the rotor (30) with the deposit becomes accessible.

11. The method according to any one of claims 9-10 whereby the rotor (30) is cleaned by removing the PU-containing deposit from the rotor (30), and preferably also of at least one of the other parts upon which PU-containing deposit is formed.

12. The method according to claim 11 whereby the cleaned rotor (30) is returned into the mixing chamber (22) which is beforehand equipped again with the plastic lining (41), after which the mixing chamber (22) is preferably put back into operation.

13. The method according to any one of the claims 7-12 which further comprises the shaping of a shaped object by the curing of the viscous homogeneous mixture (5) in a mould, preferably at a temperature of 15-60°C and/or under a curing pressure of at least 50 bar gauge, whereby preferably the pressure is maintained during at least 1 minute, whereby preferably an amount of the viscous mixture (5) which is introduced into the mould is 1,8 - 2,2 times the volume of the space in the closed mould.

14. The method according to claim 13 whereby the shaped object is selected from the list of a sleeper for the support of railway track rods or rails, a manhole cover, which manhole cover preferably meets the requirements of load class A and/or load class B and/or load class C according to the standard NBN EN 124, a grid, a cattle grid, a clinker, a floor tile, a roofing tile, a flower box, a waste bin, an element for street furniture, a fire hydrant pot, a fire hydrant frame, a foundation seat for a fire hydrant and a frame for a fire hydrant.

15. A sleeper for railway track rods of which at least one part intended for supporting a railway track rod may be obtained by the method according to any one of claims 7-14.
